Europäisches Patentamt

European Patent Office

Office européen des brevets

(11) Veröffentlichungsnummer: **0 297 429 B1**

(12) **EUROPÄISCHE PATENTSCHRIFT**

(45) Veröffentlichungstag der Patentschrift:
04.09.91 Patentblatt 91/36

(51) Int. Cl.$^5$: **F16D 66/00**

(21) Anmeldenummer: **88109987.3**

(22) Anmeldetag: **23.06.88**

---

(54) **Geber für den Betriebszustand von Bremsen.**

(30) Priorität: **03.07.87 DE 3721959**

(43) Veröffentlichungstag der Anmeldung:
**04.01.89 Patentblatt 89/01**

(45) Bekanntmachung des Hinweises auf die
Patenterteilung:
**04.09.91 Patentblatt 91/36**

(84) Benannte Vertragsstaaten:
**AT BE CH DE ES FR GB IT LI NL SE**

(56) Entgegenhaltungen:
**AU-B- 449 438**
**DE-A- 2 732 676**
**DE-A- 3 004 006**
**DE-A- 3 007 887**
**DE-A- 3 502 053**

(73) Patentinhaber: **Mannesmann Klenzle GmbH**
**Heinrich-Hertz-Strasse 45**
**W-7730 Villingen-Schwenningen (DE)**
Patentinhaber: **Bergische Achsenfabrik Fr.**
**Kotz & Söhne**
**Am Ohlerhammer**
**W-5276 Wiehl 1 (DE)**

(72) Erfinder: **Kastler, Ernst**
**Gomstelstrasse 13**
**W-7737 Oberbaldingen (DE)**
Erfinder: **Hanke, Klaus-Dieter**
**Goethestrasse 4**
**W-7730 Villingen-Schwenningen (DE)**
Erfinder: **Schultze, Hartmut**
**Oscar-Joos-Strasse 1**
**W-7730 Villingen-Schwenningen (DE)**
Erfinder: **Paech, Hertmut**
**Stettinger-Strasse 1**
**W-5220 Waldbröl-Hermesdorf (DE)**

## Beschreibung

Die Erfindung betrifft einen Geber für den Betriebszustand von Bremsen nach dem Oberbegriff von Patentanspruch 1.

Zweifellos dienen die an sich bekannten, den Verschleiß von Bremsen überwachenden Einrichtungen der Optimierung von Wartungsintervallen, insbesondere einer vorbeugenden Wartung und somit einer Minimierung unzulässiger Bremsen-Betriebszustände, was sich letzten Endes auf die Wirstschaftlichkeit des betreffenden Fahrzeuges und dessen Verkehrssicherheit positiv auswirkt. Dies gilt vor allem für den Nutzfahrzeugbereich, wo eine durch schadhafte Bremsen verringerte Bremsfunktion ein besonders großes Unfallrisiko darstellt, andererseits die bei Bremsenschäden anfallenden Reparturkosten unverhältnismäßig hoch sind oder aber erkennbar ist, daß ein Wechsel der Bremsbeläge zu einem bestimmten Wartungszeitpunkt nicht oder noch nicht zwingend erforderlich ist.

Dennoch fehlte bisher die Einsicht, Einrichtungen für die Bremsbelagverschleißanzeige generell einzusetzen. Der Grund dafür ist in der Regel nicht der zusätzliche Kostenaufwand, sondern es sind im wesentlichen die Einbauprobleme, d.h. die Anbringung eines geeigneten Sensors und dessen Verdrahtung, was bei jedem Bremsbelagwechsel vorgenommen werden muß, die Funktionsunsicherheiten bekannter Sensoren und die Tatsache, daß eine für den Bremsenzustand und die Bremsenfunktion wesentliche Größe, nämlich die Bremsentemperatur, mit einem Verschleißsensor nicht erfaßt wird.

Die Bremsentemperatur läßt, abgesehen vom Normalbetrieb, wo es bei hoher Bremsarbeit, beispielsweise auf Paßstraßen gilt, einen die Bremswirkung verringernden Fading-Effekt zu vermeiden, auch bei ausreichender Bremsbelagstärke Anomalien der Bremsenfunktion erkennen, die möglicherweise zu einem erhöhten Abrieb der Bremsbeläge oder zu einer Beschädigung der Bremstrommel bzw. der Bremscheibe führen können.

Eine relativ einfache Anordnung eines den Bremsbelagverschleiß fühlenden Sensors zeigt beispielsweise die DE-A-2732676. Zwar ist diese Anordnung hinsichtlich ihrer Funktionssicherheit zweifelhaft, der als Sensor dienende Schraubbolzen ist jedoch anstatt eines den Bremsbelag bzw. Teilbelag mit der Bremsbacke verbindenden Niets angeordnet, womit, abgesehen von den beim Einbau erforderlichen Isoliermaßnahmen, Fertigungs- und Montageaufwand gegenüber anderen Lösungen erheblich reduziert sind.

Der zusätzliche Einbau eines Temperatursensor bedeutet jedoch weiteren und bei jedem Wechseln der Bremsbeläge anfallenden Montageaufwand. Ferner ergibt sich bei der Temperaturerfassung das Problem, daß eigentlich die Temperatur der Reibflächen interessiert, der Temperatursensor aber nicht unmittelbar in der Reibfläche angeordnet werden kann, so daß durch Abstrahlung ein erheblicher Wärmeverlust, zusätzlich aber auch ein Laufzeiteffekt in Kauf genommen werden müssen. Berücksichtigt man ferner die in dem gegebenen Einsatzmilieu herrschenden Meßbedingungen, können verläßliche und jederzeit reproduzierbare Meßergebnisse im allgemeinen nicht erwartet werden.

Der Erfindung war die Aufgabe gestellt, für den Betriebszustand von Bremsen sowohl den Verschleiß des Bremsbelages als auch die Bremsen- bzw. Bremsflächentemperatur zu erfassen und die betreffenden Sensoren derart anzuordnen, daß die Voraussetzungen für relativ konstante Meßbedingungen gegeben sind und der Einbauaufwand weitgehend minimiert ist.

Die Lösung dieser Aufgabe erfolgt, ausgehend von der in der DE-A-2732676, mit den Merkmalen des kennzeichnenden Teils von Patentanspruch 1.

Die gefundene Lösung ist ferner dadurch gekennzeichnet, daß als Verschleißsensor eine innerhalb der Hülse im wesentlichen radial angeordnete Kontaktbrücke vorgesehen ist, daß die Kontaktbrücke einerseits mit der Hülsenwand, andererseits mit einem Leiter eines Signalstromkreises kontaktiert ist und daß dem außerhalb der Verschleißzone der Hülse angeordneten Temperatursensor ein durch die Verschleißzone hindurchgreifender Wärmeleiter zugeordnet ist.

Bei einem bevorzugten Ausführungsbeispiel ist in der Hülse eine wenigstens zweistufige Scheibe eingepreßt, an der Scheibe in Achsrichtung ein Stift aus hochwärmeleitfähigem Material befestigt und die axial gegeneinander versetzten Stirnwände der Scheibe sind jeweils mit einem Leiter eines Signalstromkreises kontaktiert.

Die Erfindung bietet den entscheidenden Vorteil, daß ein Verschleiß- und ein Temperatursensor zu einem einzigen Geber zusammengefaßt sind, d.h. daß sowohl in der Fertigung als auch bei der Montage lediglich ein einziger Geber zu handhaben und auf sehr einfache Weise an einer Bremsbacke anzuordnen ist, aber auch leicht ausgetauscht werden kann. Der konstruktive Aufbau des Gebers schafft, indem durch Reibungsabtragung vorzugsweise mehrere Signalstromkreise nacheinander unterbrochen werden, klar definierte Signalzustände bezüglich der Verschleißanzeige und bietet bezüglich der Temperatursignalbildung stets gleichbleibende Wärmeübertragungsverhältnisse bei relativ geringen Hystereseerscheinungen. Erwähnenswert ist außerdem, daß der Geber insbesondere in Form des bevorzugten Ausführungsbeispiels mit einfachen Bauteilen und auf einfache Weise montierbar und somit auch für die Serienfertigung geeignet ist. Der gefundene einfache Aufbau des Gebers ist auch insofern entscheidend, als er die Betriebssicherheit erhöht, was wegen der Einmaligkeit der Signalgabe von größer Bedeutung ist.

Im folgenden sei die Erfindung anhand der Zeichnungen näher erläutert. Es zeigen

FIGUR 1 eine Übersichtsdarstellung, die die Anordnung des erfindungsgemäßen Gebers an beispielsweise einer Bremsbacke einer Trommelbremse zeigt,

FIGUR 2 einen Längsschnitt eines ersten Ausführungsbeispiels des erfindungsgemäßen Gebers,

FIGUR 3 einen Längsschnitt des bevorzugten Ausführungsbeispiels des erfindungsgemäßen Gebers und

FIGUR 4 ein Blockschaltbild der Signalverarbeitung zusammen mit einer beispielsweisen bildlichen Signaldarstellung.

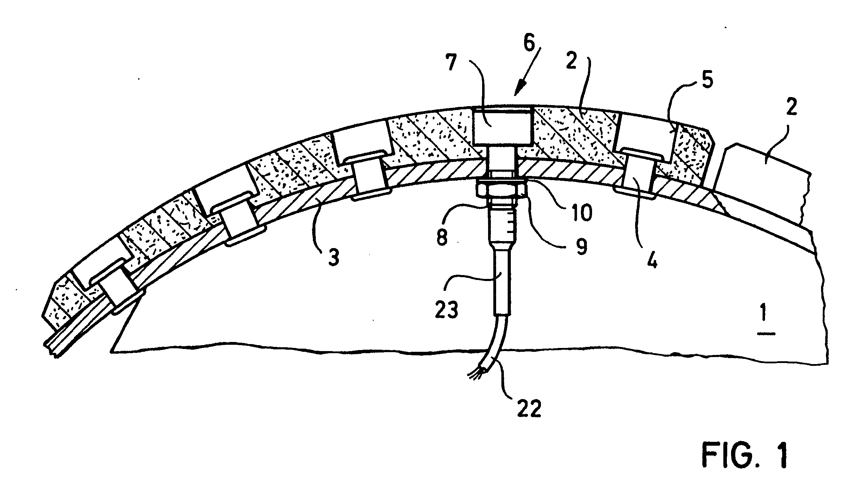

Die Übersichtsdarstellung FIGUR 1 zeigt eine teilweise geschnittene Bremsbacke 1, beispielsweise einer Trommelbremse, mit innenliegenden Bremsbacken. Mit 2 ist einer von wenigstens zwei auf einer Schulter 3 der Bremsbacke 1 befestigten Bremsbelägen bezeichnet. Die Befestigung der Bremsbeläge erfolgt üblicherweise mittels mehrerer Niete, von denen eine mit 4 bezeichnet ist und denen im Bremsbelag 2 jeweils eine zylindrische Senkung 5 zugeordnet ist. Das Gehäuse des erfindungsgemäßen Gebers 6 ist als eine wenigstens zweistufige Hülse 7 derart gestaltet, daß ein Hülsenabschnitt größeren Durchmessers den Maßen der zylindrischen Senkung entspricht und ein Hülsenabschnitt kleineren Durchmessers, der mit einem Gewinde 8 versehen ist, gleich ist dem Durchmesser des Nietschaftes. Somit läßt sich der Geber 6 in für das Nieten des Bremsbelages 2 vorgesehene, nicht näher bezeichnete Durchgangsbohrungen im Bremsbelag 2 und der Schulter 3 der Bremsbacke 1 einsetzen und mittels einer Mutter 9 und einer zwischengelegten Scheibe 10 zwischen Bremsbelag 2 und Bremsbacke 1 festspannen.

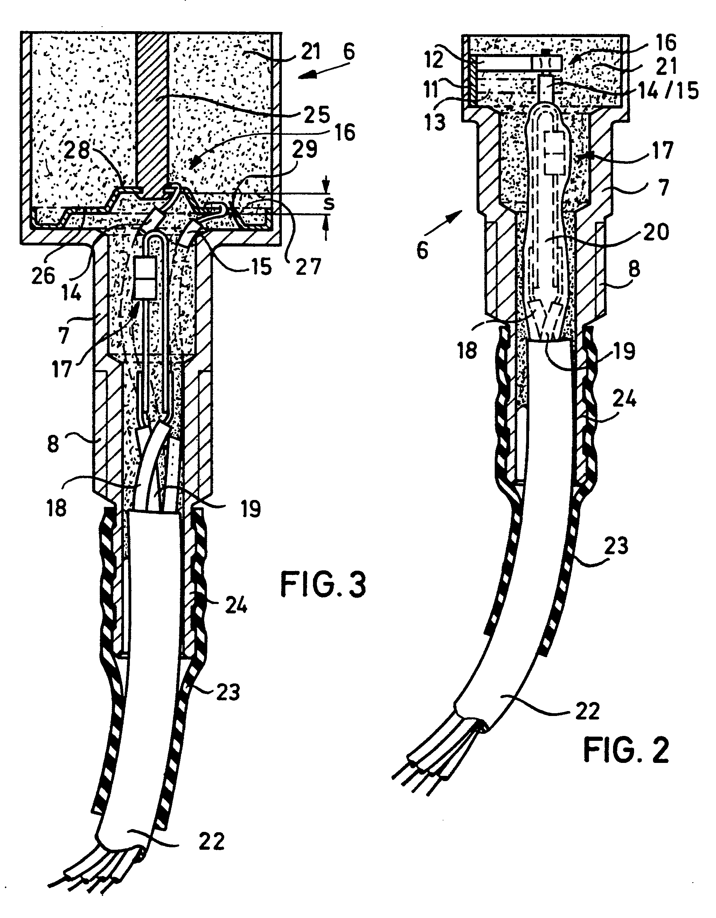

Das Schnittbild FIGUR 2 zeigt im Vergleich zu FIGUR 3 eine Geberausführung, welche für Nietsenkungen kleineren Durchmessers geeignet ist. Die FIGUR 2 zeigt ferner, daß an der Innenseite der Hülsenwand im Hülsenabschnitt größeren Durchmessers ein Steg 11, beispielsweise durch Punktschweißen befestigt ist. An dem Steg 11 sind zwei Zungen 12 und 13 ausgebildet, die in den freien Raum der Hülse 7 hineinragen, und zwar quer zur Hülsenachse und mit jeweils einem Leiter 14 bzw. 15 eines Signalstromkreises leiten verbunden sind. Die Zungen 12 und 13 bilden als Verschleißsensor 16 dienende Kontaktbrücken, die durch den Verschleiß des Bremsbelages nach und nach abgetragen werden bis zunächst der eine, dann der andere Signalstromkreis unterbrochen ist.

Erfindungsgemäß ist in der Hülse 7 zusammen mit dem Verschleißsensor 16 ein Temperatursensor 17, beispielsweise ein NTC-Widerstand angeordnet.

Bei dem Ausführungsbeispiel gemäß FIGUR 2 sind der NTC-Widerstand und dessen Lötverbindungen mit den Zuleitungen 18 und 19 vor dem Einführen in die Hülse 7 zur Vermeidung von Masseschluß an der Hülsenwand mit einer Isolationsmasse 20 umgossen worden. Nach dem Einführen des Temperatursensors 17 und der Verbindung der Signalleitungen 14 und 15 mit den Zungen 11 und 12 wurde die Hülse 7 mit einer temperaturfesten, beispielsweise keramischen Vergußmasse 21 ausgefüllt, die vorzugsweise annähernd die gleichen Verschleißeigenschaften aufweist wie das Bremsbelagmaterial, d.h. ohne zu schmieren verschleißbar ist, ferner in dem in Frage kommenden Temperaturbereich wärmebeständig ist und den Geber 6 gegen Eindringen von Feuchtigkeit abdichtet. Dem aus dem Geber 6 herausgeführten Kabel 22 ist eine Zugentlastung in Form einer Schlauchtülle 23 zugeordnet. Hierzu ist die Schlauchtülle 23 einerseits auf dem Kabel 22, andererseits auf einem an der Hülse 7 axial angeformten Schlauchstutzen 24 aufgeschrumpft.

Das bevorzugte Ausführungsbeispiel gemäß FIGUR 3 unterscheidet sich von dem vorstehend beschriebenen gemäß FIGUR 2 insbesondere dadurch, daß dem Temperatursensor 17 ein Wärmeleiter in Form eines vorzugsweise Messing- oder Kupferstiftes 25 zugeordnet und in der Hülse 7 eingebettet ist. Dadurch wird nicht nur die Temperaturlaufzeit verringert, sondern unabhängig von der Abtragung des Gebers durch den Bremsvorgang gleichbleibende Meßbedingungen geschaffen. Um den thermischen Kontakt weiter zu verbessern, ist es denkbar, den Wärmeleiter unmittelbar dem NTC-Widerstand zuzuordnen, evtl. mit diesem zu verbinden. Gemäß FIGUR 3 ist der Wärmeleiter der vorteilhaften Fertigung wegen an einem in der Hülse 7 eingepreßten Steg bzw. einer mit Durchbrüchen 26 versehenen Scheibe 27 befestigt. Die Scheibe 27 ist axial gestuft ausgebildet. Mit den Stirnwänden 28 und 29 der Scheibe 27 sind die Leiter 14 bzw. 15 der Signalstromkreise beispielsweise durch Punktschweißen verbunden. Die Scheibe 27 stellt somit die Kontaktbrücken zwischen den Leitern 14 und 15 und der mit Masse in Verbindung stehenden Hülse 7 dar. Der eingezeichnete Abstand "s" stellt das Abtragungsmaß dar, das zwischen einem ersten Signal und einem in seiner Signalwirkung markanteren zweiten Signal noch zulässig ist.

Als weitere Ausführungsvariante ist es denkbar, den Hülsenabschnitt größeren Durchmessers des Gebers 6 mit einem Rändel zu versehen, der gegenüber der Senkung 5 im Bremsbelag 2 ein Übermaß aufweist. Die Montage des Gebers 6 erfolgt dann durch Einpressen in die für den Geber 6 vorgesehene Nietöffnung. Dabei hat es sich gezeigt, daß bei dieser Ausführungsvariante ein Verschrauben des Gebers 6 nicht unbedingt erforderlich ist und somit auch das Gewinde 8 entfallen kann.

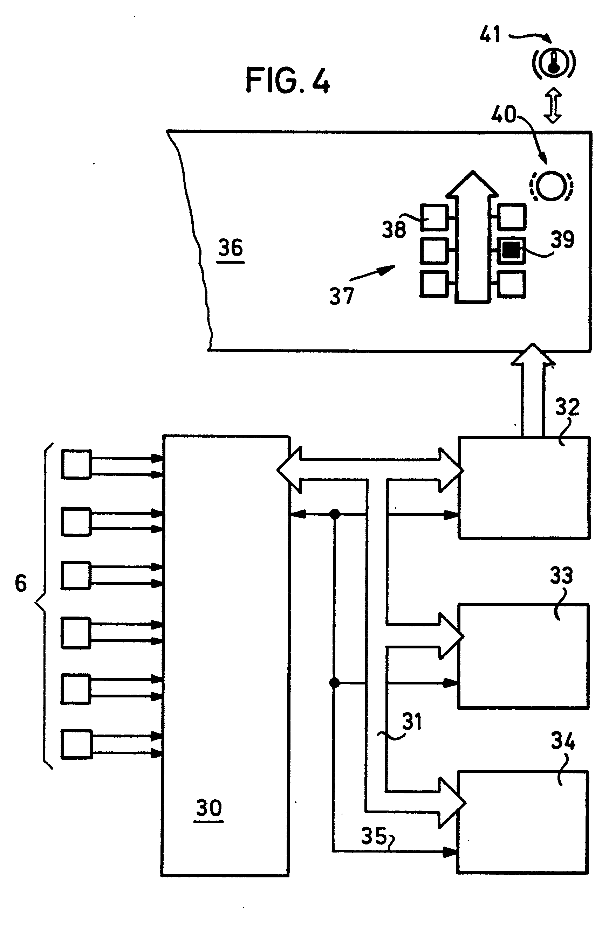

Der Vollständigkeit halber sei mit der FIGUR 4 ein Beispiel für die Signalverarbeitung und für eine geeignete Darstellung der zu meldenden Grenzwerte gezeigt. Je nach der Anzahl der Achsen des betreffenden Fahrzeuges sind vier, sechs oder acht Geber 6 den Bremsen zugeordnet. Eine geeignete Schnittstellenschaltung 30 dient der Meßwertaufbereitung und der Datenverdichtung. Sie ist über einen Datenbus 31 mit einer multiplexenden Treiberschaltung 32 für die Signalanzeige verknüpft. Ferner kann beispielsweise ein Datenerfassungssystem 33, mit welchem für Service-Zwecke relevante Daten aufbereitet und gespeichert werden, Zugriff zur Schnittstellenschaltung 30 haben. Denkbar ist ferner, die Sensorsignale für eine Steuerschaltung 34, beispielsweise einer Blockierverhinderungseinrichtung, bereitzustellen. Mit 35 ist ein Kontrollbus bezeichnet.

Ist in dem betreffenden Fahrzeug für die verschiedenen, im Fahrbetrieb interessierenden Daten, Funktionssymbole oder wörtliche Befehle und Informationen ein Display 36 vorgesehen, beispielsweise ein EL-Display, so kann das Display auch für die Darstellung der Zustände der Geber 6 mitbenutzt werden. FIGUR 4 zeigt eine für diesen Zweck geeignete und mit dem Display 36 gebildete Fahrzeugsymbolgraphik 37, in der jedem Geber 6 ein Radsymbol 38 zugeordnet ist. Innerhalb des jeweiligen Radsymbols 38 werden, wenn ein dieses Fahrzeugrad bzw. dessen Bremse betreffender Grenzwert gemeldet wird, einige Leuchtelemente zur Bildung einer Leuchtfläche 39 und somit zur Signalgabe angesteuert. Dabei erscheint ein zusätzliches Symbol 40 oder 41 für entweder den Bremsenverschleiß oder die Bremsentemperatur. Wird nun beispielsweise die zweite Stufe des Verschleißsensors 16 erreicht, so kann als Unterscheidung zur ersten Stufe und zu der dann erforderlichen Verdeutlichung des Signaleffekts das Bremsenverschleißsymbol 40 intermittierend angesteuert werden und/oder ein akustisches Signal gegeben werden.

Das geschilderte System zur Signalverarbeitung und Signaldarstellung ist selbstverständlich auch geeignet, zusätzliche Raddaten bzw. Radgrenzwerte, beispielsweise Reifendruck, Radlagertemperatur oder Rad- bzw. Achslast, anzuzeigen.

**Patentansprüche**

1. Geber (6) für den Betriebszustand von Bremsem, welcher sowohl einen Verschleißsensor als auch einen Temperatursensor umfaßt und anstatt eines Befestigungsnietes in miteinander fluchtende Durchgangsbohrungen von Bremsbelag (2) und Bremsbacke (1) eingesetzt ist, wobei die im Bremsbelag (2) befindliche Durchgangsbohrung durch eine zylindrische Senkung (5) vergrößert ist, dadurch gekennzeichnet,

a) daß das Gehäuse des Gebers (6) als eine in Durchgangsbohrung und Senkung (5) passende, gestufte Hülse (7) ausgebildet ist,
b) daß der Verschleißsensor (16) eine den Hülsenabschnitt größeren Durchmessers radial durchsetzende Kontaktbrücke aufweist, welche mit dem Signalstromkreis elektrisch verbunden ist,
c) daß dem außerhalb der Verschleißzone der Hülse (7) angeordneten Temperatursensor (17) ein durch die Verschleißzone hindurchgreifender Wärmeleiter (25) zugeordnet ist und
d) daß die Hülse (7) mit einer Vergußmasse (21) verschlossen ist, die annähernd die gleichen Verschleißeigenschaften aufweist, wie der Bremsbelag.

2. Geber nach Anspruch 1, dadurch gekennzeichnet, daß die Kontaktbrücke einerseits mit der Hülsenwand, andererseits mit einem Leiter eines Signalstromkreises kontaktiert ist.

3. Geber nach Anspruch 2, dadurch gekennzeichnet, daß der Verschleißsensor (16) mehrere in Achsrichtung der Hülse (7) gegeneinander versetzt angeordnete Kontaktbrücken aufweist.

4. Geber nach Anspruch 3, dadurch gekennzeichnet, daß an einem an der Hülsenwand befestigten Steg (11) mehrere quer zur Hülsenachse weisende Zungen (12, 13) ausgebildet sind und daß mit den Zungen (12, 13) jeweils ein Leiter (14, 15) eines Signalstromkreises verbunden ist.

5. Geber nach Anspruch 2, dadurch gekennzeichnet, daß als Kontaktbrücke und als Träger für einen Wärmeleiter ein Steg dient, welcher in der Hülse (7) quer zur Hülsenachse befestigt ist.

6. Geber nach Anspruch 2, dadurch gekennzeichnet, daß in der Hülse (7) eine wenigstens zweistufige Scheibe (27) eingepreßt ist, daß an der Scheibe (27) in Achsrichtung ein Stift (25) aus hochwärmeleitfähigem Material befestigt ist und daß die axial gegeneinander versetzten Stirnwände (28, 29) der Scheibe (27) jeweils mit einem Leiter (14, 15) eines Signalstromkreises kontaktiert sind.

7. Geber nach Anspruch 1, dadurch gekennzeichnet, daß der Abschnitt der Hülse (7) kleineren Durchmessers mit einem Gewinde (8) versehen ist und daß der Geber (6) zwischen Bremsbelag (2) und Bremsbacke (1) verschraubt ist.

8. Geber nach Anspruch 1, dadurch gekennzeichnet, daß der Abschnitt der Hülse (7) größeren Durchmessers mit einem Rändel versehen ist und daß der Geber (6) in die im Bremsbelag (2) befindliche zylindrische Senkung (5) eingepreßt ist.

**Revendications**

1. Capteur (6) pour l'état de fonctionnement de freins qui comprend, d'une part, un capteur d'usure et, d'autre part, un capteur de température et qui est inséré, à la place d'un rivet de fixation, dans des alésages de passage alignés les uns par rapport aux autres dans la garniture de frein (2) et le segment de frein (1), l'alésage de passage situé dans la garniture de frein étant agrandi par une fraisure cylindrique (5), caractérisé par le fait

a) que le boîtier du capteur (6) est réalisé sous la forme d'une douille (7) graduée allant dans l'alésage de passage et la fraisure (5),

b) que le capteur d'usure (16) présente un pont de contact qui traverse, dans le sens radial, le segment de douille de diamètre supérieur et qui est électriquement relié au circuit de courant de signal,

c) qu'au capteur de température (17) disposé à l'extérieur de la zone d'usure de la douille (7) est associé un conducteur thermique (25) traversant la zone d'usure, et

d) que la douille (7) est bouchée avec une masse de scellement (21) qui présente à peu près les mêmes propriétés d'usure que la garniture de frein.

2. Capteur selon la revendication 1, caractérisé par le fait que le pont de contact est en contact, d'une part, avec la paroi de douille, d'autre part avec un conducteur d'un circuit de courant de signal.

3. Capteur selon la revendication 2, caractérisé par le fait que le capteur d'usure (16) présente plusieurs ponts de contact décalés, les uns par rapport aux autres, dans le sens axial de la douille (7).

4. Capteur selon la revendication 3, caractérisé par le fait que sur une traverse (11) fixée sur la paroi de douille sont formées plusieurs languettes (12, 13) dirigées transversalement par rapport à l'axe de douille et qu'à chacune des languettes (12, 13) est reliée une ligne (14, 15) d'un circuit de courant de signal.

5. Capteur selon la revendication 2, caractérisé par le fait que comme pont de contact et comme support pour un conducteur thermique est utilisée une traverse qui est fixée dans la douille (7) transversalement par rapport à l'axe de douille.

6. Capteur selon la revendication 2, caractérisé par le fait que dans la douille (7) est emmanché une rondelle (27) présentant au moins deux gradins, que sur ladite rondelle (27) est fixé, dans le sens de l'axe, une tige (25) constituée d'un matériau à haute conduction thermique et que les parois frontales (28, 29) décalées axialement l'une par rapport à l'autre de la rondelle (27) sont respectivement en contact avec une ligne (14, 15) d'un circuit de courant de signal.

7. Capteur selon la revendication 1, caractérisé par le fait que le segment de la douille (7) présentant un diamètre inférieur est pourvu d'un filetage (8) et que le capteur (6) est vissé entre la garniture de frein (2) et le segment de frein (1).

8. Capteur selon la revendication 1, caractérisé par le fait que le segment de la douille (7) présentant un diamètre supérieur est pourvu d'une molette et que le capteur (6) est emmanché dans la fraisure cylindrique (5) ménagée dans la garniture de frein (2).

## Claims

1. Pickup (6) for the operating state of brakes, which comprises both a wear sensor as well as a temperature sensor and is inserted in place of a securing rivet in through bores, flush with one another, of brake lining (2) and brake shoe (1), the through bore located in the brake lining (2) being enlarged by a cylindrical sunken part (5), characterized

a) in that the housing of the pickup (6) is constructed as a stepped socket (7) fitting in through bore and sunken part (5),

b) in that the wear sensor (16) has a contact bridging part, radially penetrating the socket section of larger diameter and electrically connected to the signal circuit,

c) in that a heat conductor (25) engaging through the wear zone is associated with the temperature sensor (17) arranged outside the wear zone of the socket (7), and

d) in that the socket (7) is closed off by a casting compound (21) which has approximately the same wear properties as the brake lining.

2. Pickup according to Claim 1, characterized in that the contact bridging part is in contact on the one hand with the socket wall, and on the other hand with a conductor of a signal circuit.

3. Pickup according to Claim 2, characterized in that the wear sensor (16) has a plurality of contact bridging parts arranged offset with respect to one another in the axial direction of the socket (7).

4. Pickup according to Claim 3, characterized in that a plurality of tongues (12, 13) pointing transversely with respect to the socket axis are constructed on a web (11) secured to the socket wall, and in that a conductor (14, 15) of a signal circuit is connected to each of the tongues (12, 13).

5. Pickup according to Claim 2, characterized in that a web serves as a contact bridging part and as a carrier for a heat conductor and is secured in the socket (7) transversely with respect to the socket axis.

6. Pickup according to Claim 2, characterized in that a disc (27) with at least two steps is pressed into the socket (7), in that a pin (25) of a highly heat-conductive material is secured to the disc (27) in the axial direction, and in that the end walls (28, 29) of the disc (27), offset axially with respect to one another, are each in contact with a conductor (14, 15) a the signal circuit.

7. Pickup according to Claim 1, characterized in that the section of the socket (7) of smaller diameter is provided with a thread (8), and in that the pickup (6) is screwed between brake lining (2) and brake shoe (1).

8. Pickup according to Claim 1, characterized in that the section of the socket (7) of larger diameter is provided with a knurled edge, and in that the pickup (6) is pressed in the cylindrical sunken part (5) located in the brake lining (2).

FIG. 1

EP 0 297 429 B1

FIG. 3

FIG. 2

# FIG. 4